# EUROPEAN PATENT SPECIFICATION

(11) **EP 1 751 643 B1**
(45) Date of publication and mention of the grant of the patent: **20.06.2012**
(21) Application number: 04727339.6
(22) Date of filing: 14.04.2004
(51) Int. Cl.: G05D 23/27, G01J 5/04, G01J 5/08

(54) **METHOD TO OPTIMISE TEMPERATURE REGULATION IN TECHNOLOGICAL PROCESSES**
VERFAHREN ZUR OPTIMIERUNG DER TEMPERATURREGELUNG IN TECHNOLOGISCHEN PROZESSEN
PROCEDE D'OPTIMISATION DE LA REGULATION DE TEMPERATURE DANS DES PROCEDES TECHNOLOGIQUES

(43) Date of publication of application: 14.02.2007
(73) Proprietor: Baraldi Lubrificanti S.r.l., 40060 Osteria Grande BO (IT)
(72) Inventor: BARALDI, Luca, I-40060 OSTERIA GRANDE (IT); RAONE, Cosimo, I-40060 OSTERIA GRANDE (IT)
(74) Representative: Beszédes, Stephan G.
(86) International application number: PCT/IB2004/001128
(87) International publication number: WO 2005/101155

(56) References cited:
- EP-A- 0 798 546
- WO-A-91/13748
- WO-A-02/091735
- FR-A- 2 721 380
- PATENT ABSTRACTS OF JAPAN vol. 1997, no. 04, 30 April 1997 (1997-04-30) & JP 8 327459 A (KAWASOU DENKI KOGYO KK; YAMAMURA GLASS CO LTD), 13 December 1996 (1996-12-13)

## Description

The present invention concerns the technology of procedures to detect the temperature distribution in a technological process. International Classification G 01 J.

It is known the application of sensors to detect occasionally the thermologic parameters which concern the course of technological processes.

EP 0 798 546 A discloses a method for regulating the temperature in a technological process whereby the method comprises the steps of detecting the temperature of the target by means of a detecting device comprising a casing with a shutter and a radiation sensor and transmitting the detected data to a computer equipment which processes, visualises and stores them.

The problem to be solved by the present invention is to optimise the temperature regulation in processes having a critical warm-up phase.

Surprisingly this has been solved by the invention.

The present invention suggests improvements to optimise the temperature regulation in the warm-up phase of technological processes where the detection of the service temperature distribution is realised through the automatic and programmable execution of explorative excursions performed through adjustable equipment connected to a protective structure with shutter which contains a pointer device and a radiation sensor, which after having performed the detection of thermologic process parameters, sends them to a computer which processes, visualises and records them to control and regulate the distribution of the service temperatures in the course of the process.

The subject-matter of the invention is a method to optimise temperature regulation in technological processes by detection of the thermologic parameters of the die (8) through explorative excursions performed through adjustable equipment (1) connected to a protective structure (2) with shutter (3) which contains a pointer device (5) and a radiation sensor (4) and transmission of the detected data to a computer equipment (9) which processes, visualises and records them as temperature values, characterized by that these temperature values are compared, at each cycle, with predefined sample values, to obtain signals which carry out retroaction controls operating on the running technological process, temporarily it is retroacted on the running technological process using a specific release agent fluid (12) which has the purpose to take off little heat from the die (8) during the warm-up phase in order to reduce the necessary number of cycles to let the die (8) reach the normal thermal operating conditions and reduce the time of the single cycle of the technological process and automatically switching, controlled by the computer equipment (9), from the fluid (12) to the generic water based release agent fluid (11), by sending another control signal after achievement of the normal thermal operating conditions. Particularly EP 0 798 546 A does not disclose the use of two distinctive fluids with the step of switching from one to the other in response to the signal provided by a scanning or exploring radiation sensor. It cannot even be found in EP 0 798 546 A a hint for using the detection signal in a retroaction operation since the use of a spraying system having two different fluids taking off different quantities of heat cannot be considered as a known or standard option in this field and thus this is surprising:

### DESCRIPTION

The invention is now described with reference to the schematic figures of the drawings attached as a not limiting example.

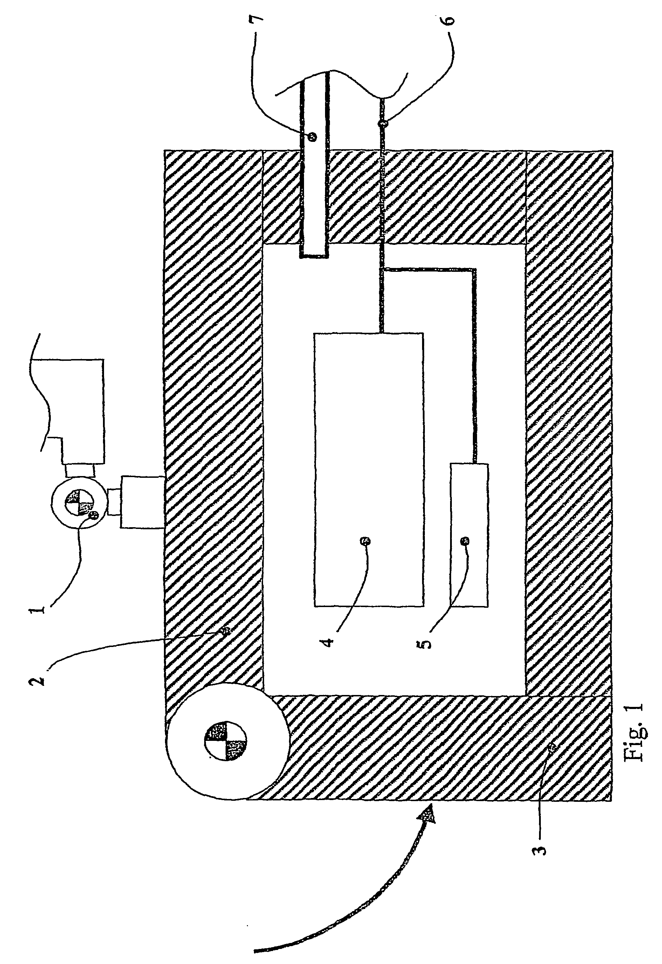

Figure 1 represents schematically the protective structure with the shutter (3) in closed position.

Figure 2 represents schematically the protective structure with the shutter (3) in open position.

One can notice the presence within the protective structure of a pointer device (5) and of a radiation sensor (4) that, after having performed the detection of the thermologic parameters of the process, sends them to the computer equipment (9) that processes them and records them to control and regulate the distribution of the service temperatures at the wall's surface (8).

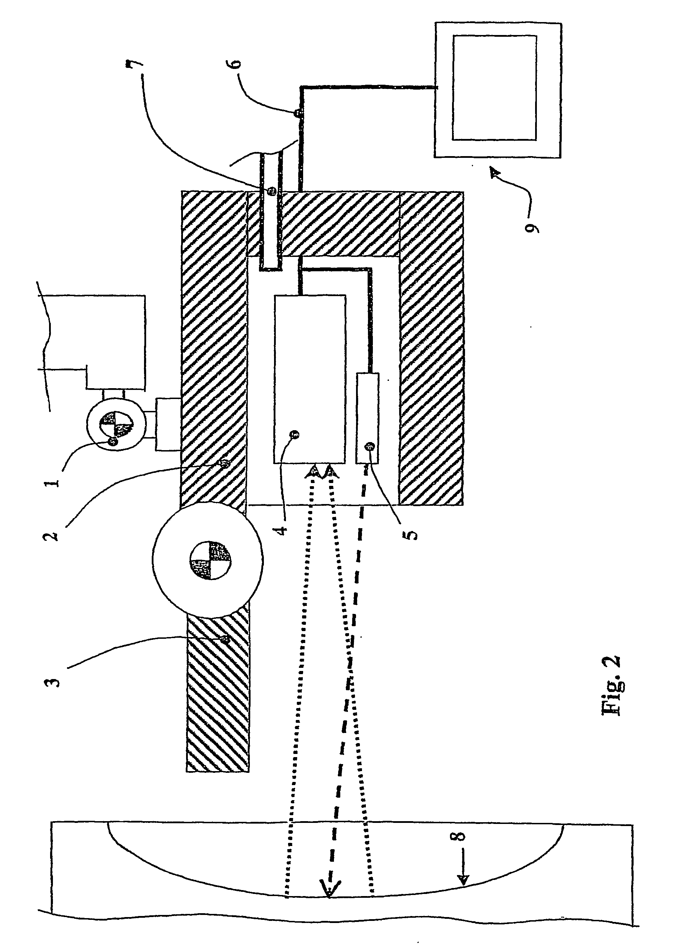

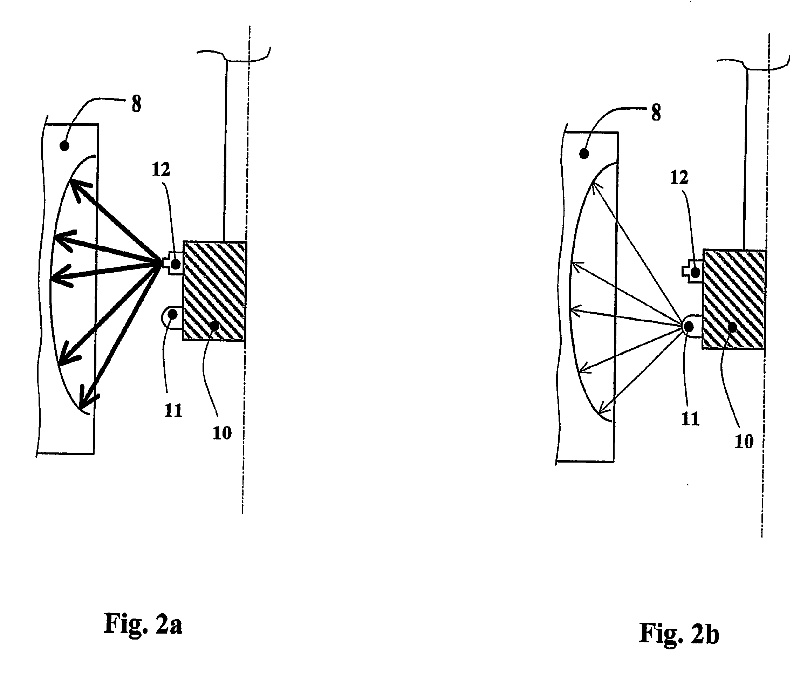

Figure 2a represents schematically the intervention of a specific release agent fluid (12) which has the purpose to take off little heat from the die (8) in order to reduce the WARM-UP phase.

Figure 2b represents schematically the intervention of a generic release agent fluid (11) for carrying out correctly the technological process.

In the figures each single detail is marked as follows:
1 indicates an adjustable equipment whose explorative excursions, programmed by the computer (9), are automatically performed.;
2 is a protective structure;
3 is a shutter;
4 is a radiation sensor to detect the thermologic parameters of the process to be inspected;
5 is a pointer device to place the detecting;
6 indicates the connecting cables of the computer equipment;
7 indicates the pneumatic connection to allow the introduction of air in the protective structure;
8 is a wall at whose surface the distribution of the service temperatures should be detected;
9 indicates the computer equipment;
10 indicates the device that introduces the sprayers between the die halves at each cycle;
11 indicates the sprayer of the traditional water based release agent fluid;
12 indicates the sprayer of the specific fluid for the WARM-UP phase.

The equipment works as follows:
DURING CONTINUOUS RUNNING OF THE TECHNOLOGICAL PROCESS:
   - management of the program of automatic excursions of the adjustable equipment (1);
   - acquisition and processing of the thermologic parameters detected by the sensor (4) and their transduction in temperature values;
   - visualisation and mapping of the distribution of the temperature values upon the explored surface (8);
   - control and regulation of the technological process to optimise the distribution of the service temperatures.
DURING THE WARM-UP PHASE:
   DETECTION of the thermologic parameters of the die (8) through explorative excursions performed through adjustable equipment (1) connected to a protective structure (2) which contains a pointer device (5) and a radiation sensor (4).
   TRANSMISSION of the detected data to a computer equipment (9) which processes, visualises and records them as temperature values. These values are compared, at each cycle, with predefined sample values, to obtain signals which carry out retroaction controls operating on the running technological process.
   Temporary RETROACTION on the running technological process using a specific release agent fluid (12) which has the purpose to take off little heat from the die (8) during the WARM-UP phase in order to reduce the necessary number of cycles to let the die (8) reach the normal thermal operating conditions and reduce the time of the single cycle of the technological process.
   SWITCHING, controlled by the computer equipment (9), from the fluid (12) to the traditional water based release agent fluid (11) by sending another control signal after achievement of the normal thermal operating conditions.
   The evidence of the figures highlights the simplicity and the reliability of the procedure which can be purposely applied in metallurgic plants, especially in die-casting and moulding plants or in similar technological processes.
   It should be pointed out the importance of the fact that the shutter (3), opening only when the detection is performed, protects always the sensor (4) and the pointer (5) from the environmental disturbances of the metallurgic process.
   Furthermore, it should be pointed out that the resulting mapping of the values of the process temperatures allows to have a synoptic view of the present conditions of the process. It also allows the simultaneous detection of possible critical zones which require more attention in the regulation of the cooling system.
   The invention could be realised with technological solutions and with structural proportioning and dimensioning which could fit different technical needs.
   All the methods to detect the distribution of service temperatures in a technological process, which will feature the characteristics as basically described, shown and hereinafter claimed, will be considered part of the protection sphere of the present invention.

## Claims

1. Method to optimise temperature regulation in technological processes by detection of the thermologic parameters of the die (8) through explorative excursions performed through adjustable equipment (1) connected to a protective structure (2) with shutter (3) which contains a pointer device (5) and a radiation sensor (4) and transmission of the detected data to a computer equipment (9) which processes, visualises and records them as temperature values, **characterized by** that these temperature values are compared, at each cycle, with predefined sample values, to obtain signals which carry out retroaction controls operating on the running technological process, temporarily it is retroacted on the running technological process using a specific release agent fluid (12) which has the purpose to take off little heat from the die (8) during the warm-up phase in order to reduce the necessary number of cycles to let the die (8) reach the normal thermal operating conditions and reduce the time of the single cycle of the technological process and automatically switching, controlled by the computer equipment (9), from the fluid (12) to the generic water based release agent fluid (11), by sending another control signal after achievement of the normal thermal operating conditions.

## Patentansprüche

1. Verfahren zur Optimierung einer Temperaturregelung in technologischen Prozessen durch Detektion thermologischer Parameter des Werkzeuges (8) über explorative Auslenkungen, die von einer verstellbaren Einrichtung (1) ausgeführt werden, die mit einer schützenden Struktur (2) mit einem Verschluss (3) verbunden ist, und die eine Zeigervorrichtung (5) und einen Strahlungssensor (4) enthält, und Übertragung der detektierten Daten an eine Computereinrichtung (9), welche diese als Temperaturwerte verarbeitet, visualisiert und aufzeichnet,
**dadurch gekennzeichnet, dass**
diese Temperaturwerte bei jedem Zyklus mit vordefinierten Probewerten verglichen werden, um Signale zu beschaffen, welche Rückwirkungssteuerungen ausführen, die auf den laufenden technologischen Prozess einwirken, wobei temporär auf den laufenden Prozess durch Verwendung eines spezifischen Trennmittelfluids (12) zurückgewirkt wird, das den Zweck hat, etwas Wärme von dem Werkzeug (8) während der Aufwärmphase wegzunehmen, um die erforderliche Anzahl von Zyklen zu reduzieren, um das Werkzeug (8) die normalen thermischen Betriebsbedingungen erreichen zu lassen und die Dauer des einzelnen Zyklus des technologischen Prozesses zu reduzieren und, gesteuert durch die Computereinrichtung (9), automatisch von dem Fluid (12) zu dem generischen wasserbasierten Trennmittelfluid (11) zu schalten, indem ein weiteres Steuersignal nach Erreichen der normalen Betriebsbedingungen gesendet wird.

## Revendications

1. Procédé pour optimiser la régulation de la température dans des processus technologiques par la détection des paramètres thermologiques de la matrice (8) par des excursions exploratoires effectuées par un équipement ajustable (1) relié à une structure protectrice (2) avec un volet (3) qui contient un dispositif pointeur (5) et un capteur de rayonnement (4) et par la transmission des données détectées vers un équipement informatique (9) qui les traite, les visualise et les enregistre en tant que valeurs de température, **caractérisé en ce que** ces valeurs de température sont comparées, à chaque cycle, avec des valeurs échantillons prédéfinies pour obtenir des signaux qui effectuent des contrôles de rétroaction fonctionnant sur le processus technologique en cours, il est procédé temporairement à une rétroaction sur le processus technologique en cours au moyen d'un fluide d'agent à libération spécifique (12) qui a pour but de prélever un peu de chaleur de la matrice (8) pendant la phase d'échauffement afin de réduire le nombre nécessaire de cycles pour laisser la matrice (8) atteindre les conditions opératoires thermiques normales et pour réduire la durée du seul cycle du processus technologique et la commutation automatique, contrôlée par l'équipement informatique (9), du fluide (12) vers le fluide d'agent de libération (11) à base d'eau générique par l'envoi d'un autre signal de contrôle après atteinte des conditions opératoires thermiques normales.
